# EUROPÄISCHE PATENTSCHRIFT

(11) **EP 2 911 881 B1**
(45) Veröffentlichungstag und Bekanntmachung des Hinweises auf die Patenterteilung: **21.09.2016**
(21) Anmeldenummer: 13798588.3
(22) Anmeldetag: 24.10.2013
(51) Int. Cl.: B41F 16/00, B44B 5/00, B44B 5/02, B41F 19/06, B44C 1/17, B21D 37/16

(54) **HEISSPRÄGEVORRICHTUNG**
HOT STAMPING MACHINE
DISPOSITIF D'ESTAMPAGE À CHAUD

(30) Priorität: 25.10.2012 DE 102012110222
(43) Veröffentlichungstag der Anmeldung: 02.09.2015
(73) Patentinhaber: Leonhard Kurz Stiftung & Co. KG, 90763 Fürth (DE)
(72) Erfinder: BIEBER, Reinhard, 91189 Rohr (DE)
(74) Vertreter: Louis Pöhlau Lohrentz
(86) Internationale Anmeldenummer: PCT/EP2013/072317
(87) Internationale Veröffentlichungsnummer: WO 2014/064216

(56) Entgegenhaltungen:
- EP-A2- 1 997 631
- WO-A1-00/16980
- WO-A1-94/13487

## Beschreibung

Die Erfindung betrifft eine Heißprägevorrichtung nach dem Oberbegriff des Gegenstands des Anspruchs 1.

Heißprägevorrichtungen werden eingesetzt, um eine auf einer Trägerschicht einer Heißprägefolie angeordnete Übertragungsschicht unter Einwirkung von Temperatur und Druck auf ein Substrat zu übertragen. Dazu ist eine beheizte Prägewalze vorgesehen, die mit einer Gegendruckwalze zusammenwirkt. Die Trägerschicht wird stromabwärts hinter einem zwischen der Prägewalze und der Gegendruckwalze ausgebildetem Prägespalt mittels einer Ablösevorrichtung von der auf das Substrat übertragenen Übertragungsschicht abgezogen. Bei Verwendung einer profilierten Prägewalze und/oder bei Verwendung einer nur in bestimmten Flächenbereichen auf das Substrat aufgetragenen Haftschicht, an welcher die Übertragungsschicht entsprechend dem Layout der Haftschicht flächenbereichsweise haftet, werden nur Bereiche der Übertragungsschicht auf das Substrat übertragen (entsprechend der Profilierung der Prägewalze und/oder entsprechend dem Layout der Haftschicht), so dass die abgezogene Trägerschicht auch Reste der Übertragungsschicht aufweisen kann.
Aus der DE 10159661 C1 ist eine Heißprägevorrichtung der beschriebenen Art bekannt.

Ferner offenbart die WO 00/16980 A1 eine Heißprägevorrichtung gemäß dem Oberbegriff des Anspruchs 1.
In der Ablösevorrichtung läuft die abzulösende Trägerschicht über eine Ablösekante, wobei die Flächen, die die Ablösekante einschließen bzw. die daran angrenzen unter einem Ablösewinkel zur Auflageebene des Substrats geneigt sind. Die Ablösekante muss einen kleinen Radius aufweisen, das heißt als eine scharfe Kante ausgebildet sein. Die Größe des Ablösewinkels ist abhängig von der Dicke und der Steifigkeit des Substrats. Je weniger steif das Substrat ist, desto größer muss der Ablösewinkel sein, um ein Hochreißen und/oder Mitreißen des Substrats zusammen mit der Trägerschicht zu vermeiden. Das gilt auch für die Übertragung der Übertragungsschicht in Form von kleinen bzw. feinen Motiven, d. h. Motiven mit geringen Strichstärken und/oder feinsten Details im Layout insbesondere in den Randbereichen der Flächenbereiche der auf das Substrat übertragenen Übertragungsschicht.
Im Betrieb der Heißprägevorrichtung verschmutzt die Ablösekante der Ablösevorrichtung, wobei das Ansammeln von Staub- und Schmutzpartikeln an der Ablösekante insbesondere durch elektrostatische Aufladungen der als Kunststofffolie ausgebildeten Trägerschicht begünstigt wird. Durch die Verschmutzung der Ablösekante steigt die Reibung an der Ablösekante mit der Zeit so stark an, dass der Betrieb der Heißprägevorrichtung unterbrochen werden muss und die Ablösekante manuell gereinigt werden muss.

Aufgabe der vorliegenden Erfindung ist es, eine Heißprägevorrichtung anzugeben, die einen störungsfreien Dauerbetrieb der Heißprägevorrichtung ermöglicht.

Erfindungsgemäß wird diese Aufgabe mit dem Gegenstand des Anspruchs 1 gelöst. Es wird eine Heißprägevorrichtung mit einer Prägevorrichtung zur Übertragung einer auf einer Trägerschicht einer Heißprägefolie angeordneten Übertragungsschicht auf ein Substrat beschrieben, umfassend eine beheizbare Prägewalze und eine Gegendruckwalze, zwischen denen ein Prägespalt ausgebildet ist, in dem ein beprägtes Substrat ausgebildet wird, sowie eine stromabwärts angeordnete Ablösevorrichtung zur Ablösung der Trägerschicht von dem beprägten Substrat, wobei vorgesehen ist, dass die Ablösevorrichtung ein Ablöseelement aufweist, das als ein balkenförmiger Hohlkörper ausgebildet ist, an dem eine Zuführung für ein Druckgas angeordnet ist, und dass mindestens eine Längskante des Ablöseelements als eine perforierte Ablösekante mit Ausströmöffnungen für das Druckgas zur Ausbildung eines Gaspolsters zwischen der Trägerschicht und der Ablösekante ausgebildet ist.

Die erfindungsgemäße Heißprägevorrichtung weist den Vorteil auf, dass die abgelöste Trägerschicht auf einem Gaspolster über die Ablösekante gleitet und deshalb kein Abrieb mehr auftritt. Staub- und Schmutzpartikel werden durch das strömende Gaspolster von der Ablösekante ferngehalten. Weiter wird die Ablösekante durch das strömende Gas wirksam gekühlt, so dass eine Überhitzung der Ablösekante vermieden wird.

Vorzugsweise kann Luft oder Stickstoff als Druckgas vorgesehen sein.

Es kann vorgesehen sein, dass die Ablösekante quer zur Laufrichtung und parallel zur Oberseite des beschichteten Substrats angeordnet ist.

Das Ablöseelement kann einen polygonalen Querschnitt aufweisen.

In einer vorteilhaften Ausbildung kann vorgesehen sein, dass das Ablöseelement einen rechteckförmigen Querschnitt aufweist. Es kann aber auch beispielsweise ein dreieckiger oder sechseckiger Querschnitt vorgesehen sein.

Es kann vorgesehen sein, dass die Ablösekante Durchgangslöcher aufweist, die in die Austrittsöffnungen münden.

Die Ablösekante kann als eine abgerundete Kante mit einem Kantenradius ausgebildet sein. Der Kantenradius kann vorteilhafterweise im Bereich von 1 mm bis 10 mm liegen.

Die Durchgangslöcher können als Bohrungen mit einem Bohrungsradius ausgebildet sein, der kleiner als der Kantenradius der Ablösekante ist.

In einer vorteilhaften Ausbildung kann vorgesehen sein, dass der Bohrungsradius um 20 % kleiner ist als der Kantenradius der Ablösekante.

Weiter können die Durchgangslöcher als Schlitze mit einer Schlitzbreite ausgebildet sein, der kleiner als der Kantenradius der Ablösekante ist.

In einer vorteilhaften Ausbildung kann vorgesehen sein, dass die Schlitzbreite um 20 % kleiner ist als der Kantenradius der Ablösekante.
Es kann auch vorgesehen sein, dass das Ablöseelement aus einem Sintermaterial mit offenen Poren ausgebildet ist, wobei die offenen Poren die Durchgangslöcher bilden und wobei die offenen Poren in den Bereichen außerhalb der Ablösekante mit einem Lacküberzug versiegelt sind. Bei dem Sintermaterial kann es sich um einen keramischen oder einen metallischen Werkstoff handeln.

Zur Ausbildung eines gleichmäßigen Gaspolsters kann vorgesehen sein, dass die Durchgangslöcher gleichmäßig über die Fläche der Ablösekante verteilt sind.
In einer vorteilhaften Ausbildung kann vorgesehen sein, dass das Flächenverhältnis der Gesamtfläche der Ausströmöffnungen an der Ablösekante zu der geschlossenen Restfläche der Ablösekante 50 : 50 % ist. Weiter kann vorgesehen sein, dass der Druck des Druckgases im Bereich von 1 bar bis 6 bar ist, vorzugsweise im Bereich von 1 bar bis 3 bar ist.
Der Druck des Druckgases kann so gewählt sein, dass zwischen der Oberfläche der Ablösekante und der der Ablösekante zugewandten Oberfläche der Trägerschicht ein Gaspolster mit einer Dicke im Bereich von 1 µm bis 100 µm ausgebildet ist.
Das Ablöseelement kann in einem horizontalen Achsabstand von 200 mm bis 300 mm stromabwärts hinter der Prägewalze angeordnet sein, bevorzugt in einem horizontalen Achsabstand von 280 mm bis 295 mm angeordnet sein. Dieser Abstand ist von der benötigen Abkühlzeit des Verbunds aus Substrat und Heißprägefolie nach der Heißprägung abhängig. Die Abkühlzeit wird benötigt, um ein qualitativ gutes Prägeergebnis erreichen zu können. Zu einem qualitativ guten Prägeergebnis gehören insbesondere eine ausreichende Haftung der Übertragungsschicht auf dem Substrat sowie eine definierte Trennung der Übertragungsschicht an den Flächenkanten des Layouts. Wie lang diese Abkühlzeit sein muss, ist von einer Vielzahl von Parametern abhängig, insbesondere Geschwindigkeit der Heißprägung, Feinheit der Strukturen im Prägelayout, Aufbau und chemisch/physikalische Eigenschaften der Heißprägefolie.
Es kann vorgesehen sein, dass der vertikale Abstand zur Unterseite des beprägten Substrats und/oder der Neigungswinkel des Ablöseelements einstellbar sind. Der vertikale Abstand kann von der Oberseite der Ablösekante zur Unterseite des beprägten Substrats gemessen sein.
Der vertikale Abstand kann im Bereich von 0,2 mm bis 5 mm sein, bevorzugt im Bereich von 1,5 mm bis 3 mm sein.

Das Ablöseelement kann um eine Drehachse parallel zur Längsachse des Ablöseelements um ±15° schwenkbar ausgebildet sein. Als Drehlager kann beispielsweise der ausgangsseitige Endabschnitt des Anschlussstutzens vorgesehen sein.

Die Erfindung wird nun anhand von Ausführungsbeispielen näher erläutert. Es zeigen
- Fig. 1: ein erstes Ausführungsbeispiel der erfindungsgemäßen Heißprägevorrichtung in schematischer Darstellung;
- Fig. 2: eine Ablösevorrichtung der Heißprägevorrichtung in Fig. 1 in schematischer Darstellung;
- Fig. 3: ein zweites Ausführungsbeispiel der Ablösevorrichtung in Fig. 2;
- Fig. 4: ein drittes Ausführungsbeispiel der Ablösevorrichtung in Fig. 2.

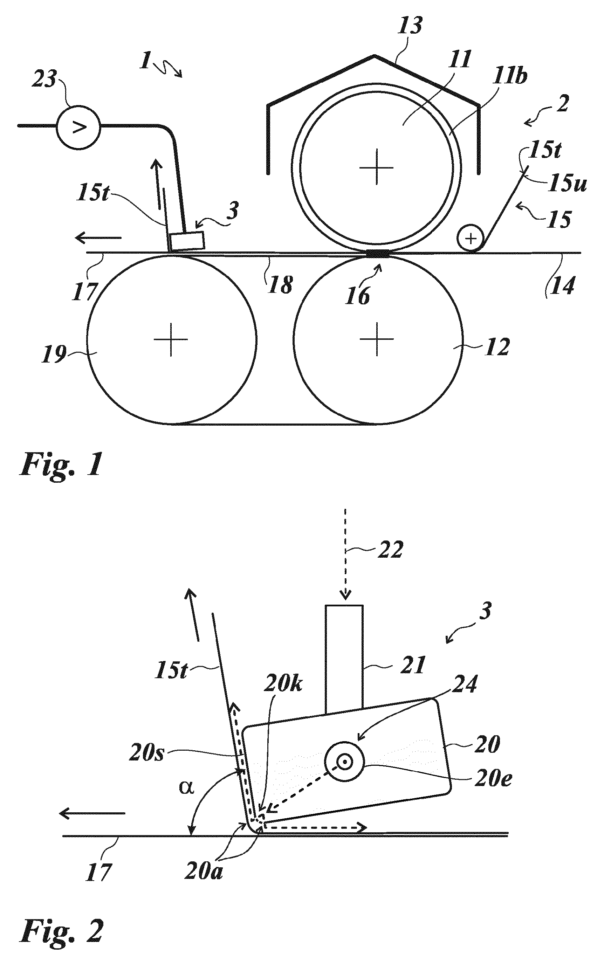

Fig. 1 zeigt eine Heißprägevorrichtung 1 mit einer Prägevorrichtung 2 und einer Ablösevorrichtung 3. Die Prägevorrichtung 2 umfasst eine Prägewalze 11, eine Gegendruckwalze 12 und eine Heizeinrichtung 13.

Die Prägewalze 11 weist an ihrem Außenumfang eine Beschichtung 11 b aus einem Elastomer auf. Bei dem Elastomer handelt es sich vorzugsweise um Silikonkautschuk. Die Gegendruckwalze 12 ist aus Stahl gefertigt.

Die Heizeinrichtung 13 ist über der Prägewalze 11 angeordnet und in dem in Fig. 1 dargestellten Ausführungsbeispiel als eine mittels eines Temperaturreglers geregelte Infrarotstrahlungsheizung ausgebildet.

Stromaufwärts vor der Prägevorrichtung 2 werden ein zu beprägendes Substrat 14 und eine Heißprägefolie 15 zugeführt, die in einem zwischen der Prägewalze 11 und der Gegendruckwalze 12 ausgebildeten Prägespalt 16 unter Ausbildung eines Prägedrucks miteinander verbunden werden.

Die Heißprägefolie 15 weist eine auf einer Trägerschicht 15t angeordnete Übertragungsschicht 15u auf. Die Trägerschicht 15t kann z.B. aus PET oder Polypropylen, Polystyrol, PVC, PMMA, ABS, Polyamid sein. Die Heißprägefolie 15 ist so angeordnet, dass die Übertragungsschicht 15u der Oberseite des zu beprägenden Substrats 14 zugewandt ist. Die Übertragungsschicht 15u kann mit einer hitzeaktivierbaren Kleberschicht beschichtet sein oder selbstklebend (Kaltkleber) ausgebildet sein. Zwischen der Übertragungsschicht 15u und der Trägerschicht 15t kann eine Trennschicht angeordnet sein, die das Ablösen der Übertragungsschicht 15u von der Trägerschicht 15t erleichtert.

Die Übertragungsschicht der Heißprägefolie weist im Allgemeinen mehrere Schichten auf, insbesondere eine Ablöseschicht (beispielsweise aus Wachs oder wachshaltigen Verbindungen), eine Schutzlackschicht, eine hitzeaktivierbare Kleberschicht. Zusätzlich können eine oder mehrere, flächig partiell oder vollflächig aufgebrachte, Dekorationsschichten und/oder Funktionsschichten enthalten sein. Dekorationsschichten sind zum Beispiel farbige (opak oder transparent oder transluzent) Lackschichten, Metallschichten oder Reliefstrukturen (haptisch oder optisch refraktiv oder optisch diffraktiv wirkend). Funktionsschichten sind beispielsweise elektrisch leitende Schichten (Metall, ITO (ITO = Indium Tin Oxide)), elektrisch halbleitende Schichten (z.B. Halbleiterpolymere) oder elektrisch nichtleitende Schichten (elektrisch isolierende Lackschichten) oder optisch mattierende oder anti-reflektierend wirkende Schichten (z.B. mit mikroskopischen Mattstrukturen) oder die Haftwirkung und/oder die Oberflächenspannung modifizierende Strukturen (Lotus-Effekt-Strukturen oder ähnliche). Zwischen den einzelnen Schichten können zusätzliche Hilfsschichten, insbesondere Haftvermittlerschichten vorhanden sein. Die einzelnen Schichten der Übertragungslage sind etwa zwischen 1 nm und 50 µm dick.

Das zu beprägende Substrat 14 ist bevorzugt ein flexibles Substrat, beispielsweise Papier mit einem Flächengewicht von 30 g/m² bis 350 g/m², bevorzugt 80 g/m² bis 350 g/m², Karton, Kunststoff oder ein Hybridmaterial oder ein Laminat.
Durch das Übertragen der Übertragungsschicht 15u auf das Substrat 14 wird ein beprägtes Substrat 17 ausgebildet, das noch mit der Trägerschicht 15t verbunden ist.
Die Breite des Prägespalts 16 ist im Wesentlichen durch den Prägedruck und durch die unter dem Prägedruck eintretende lokale Verformung der Beschichtung 11 b der Prägewalze 11 bestimmt. Die einzustellenden Werte für Druck, Temperatur und Vorschubgeschwindigkeit sind abhängig von zahlreichen Parametern, wie den Materialeigenschaften der eingesetzten Heißprägefolie, dem Prägedekor und den Materialeigenschaften des Substrats. Die Trägerschicht 15t wird in der stromabwärts hinter der Prägevorrichtung 2 angeordneten Ablösevorrichtung 3 von dem beprägten Substrat 17 abgelöst. Aufbau und Wirkungsweise der Ablösevorrichtung 3 werden weiter unten in Fig. 2 beschrieben. Die Ablösevorrichtung 3 ist über dem mit der Trägerschicht 15t verbundenen beprägten Substrat 17 angeordnet. Die abgelöste Trägerschicht 15t einer nicht dargestellten Aufwickelrolle zugeführt.
Zwischen dem Prägespalt 16 und der Ablösevorrichtung 3 ist unter dem beprägten Substrat 17 ein nahtloses Band 18 angeordnet. Das nahtlose Band 18 bildet eine den Prägespalt 16 übergreifende biegesteife Lagereinrichtung. Das nahtlose Band 18 ist auf der Gegendruckwalze 12 und einer Umlenkwalze 19 geführt, wobei der Lagerabstand der Gegendruckwalze 12 und einer Umlenkwalze 19 so eingestellt ist, dass das Band 18 mit einer solchen Zugkraft

belastet ist, dass es eine biegesteife ebene Auflagefläche für das beschichtete Substrat 17 bildet.

In dem in Fig. 1 dargestellten Ausführungsbeispielen sind Transportvorrichtungen sowie Vorrats- und Aufwickelrollen für das Substrat 14, 17 und die Heißprägefolie 15 bzw. die Trägerschicht 15t nicht dargestellt. Es kann vorgesehen sein, dass die Heißprägevorrichtung 1 eine Fertigungsstation in einer Fertigungsanlage nach dem Rolle-zu-Rolle-Prinzip ist. Das Substrat kann nach dem Rolle-zu-Rolle-Prinzip verarbeitet, d. h. von einer Rolle endlos abgewickelt, dann verarbeitet und anschließend wieder aufgewickelt werden. Das Substrat kann auch bogenweise verarbeitet werden, wobei die einzelnen Bögen von einem Stapel zugeführt werden und nach der Verarbeitung wieder auf einem Stapel gesammelt werden. Die Heißprägefolie wird üblicherweise nach dem Rolle-zu-Rolle-Prinzip verarbeitet, d. h. von einer Rolle endlos abgewickelt, dann verarbeitet und anschließend wieder aufgewickelt.

Fig. 2 zeigt den Aufbau der Ablösevorrichtung 3 im Einzelnen.

Die Ablösevorrichtung 3 umfasst ein Ablöseelement 20 und einen Anschlussstutzen 21 zur Zuführung eines Druckgases, vorzugsweise von Druckluft 22.

Das Ablöseelement 20 ist als ein balkenförmiger Hohlkörper ausgebildet, der in dem in Fig. 2 dargestellten Ausführungsbeispiel einen rechteckförmigen Querschnitt aufweist. Es kann aber auch ein anderer Querschnitt vorgesehen sein, beispielsweise ein dreieckförmiger oder sechseckförmiger Querschnitt. Wesentlich ist, dass an dem Ablöseelement 20 mindestens eine Längskante als eine perforierte Ablösekante 20k mit Ausströmöffnungen 20a ausgebildet ist und mindestens eine Einströmöffnung 20e vorgesehen ist, mit der der Ausgang des Anschlussstutzens 21 gasdicht verbunden ist. Die Ablösekante 20k ist vorzugsweise als eine abgerundete Kante mit einem Kantenradius ausgebildet. Der Kantenradius kann beispielsweise im Bereich von 1 mm bis 10 mm sein. Die Ablösekante 20k ist quer zur Laufrichtung und parallel zur Oberseite des beschichteten Substrats 17 angeordnet. Das Ablöseelement 20 ist in einem horizontalen Achsabstand von 200 mm bis 300 mm, bevorzugt 280 mm bis 295 mm stromabwärts hinter der Prägewalze 11 und in einer vertikalen Abstand von 0,2 mm bis 5 mm, bevorzugt 1,5 mm bis 3 mm zur Unterseite des beprägten Substrats 17 angeordnet.

Der Eingang des Anschlussstutzens 21 ist mit einem in Fig. 1 schematisch dargestellten Kompressor 23 verbunden, der die Druckluft 22 bereitstellt. Die in die Einströmöffnung des Ablöseelements 20 einströmende Druckluft 22 strömt aus den entlang der Ablösekante 20k angeordneten Ausströmöffnungen 20a aus, wobei zwischen der Oberfläche der Ablösekante 20k und der Rückseite der Trägerschicht 15t, die vorzugsweise als eine Kunststofffolie ausgebildet ist, ein Luftpolster aufgebaut wird.

Die Ausströmöffnungen 20a können beispielsweise gebohrt oder mittels Laser eingebracht sein. Je gleichmäßiger die Verteilung der Ausströmöffnungen 20a auf der Oberfläche der Ablösekante 20k ist, desto gleichmäßiger und homogener ist auch das Luftpolster.

Die zweckmäßige Größe, Form und Anordnung der eingebrachten Öffnungen sind von verschiedenen Faktoren abhängig, beispielsweise Dicke des zu beprägenden Substrats, Dicke der verwendeten Heißprägefolie und Kantenradius der Ablösekante 20k.

Es hat sich bewährt, die Ausströmöffnungen 20a als Bohrungen mit einem Bohrungsradius auszubilden, der kleiner als der Kantenradius der Ablösekante 20k ist. Bevorzugt ist der Bohrungsradius um 20 % kleiner als der Kantenradius der Ablösekante 20k.

Es kann auch vorgesehen sein, die Ausströmöffnungen 20a als Schlitze auszubilden. In diesem Fall hat es sich bewährt, die Breite der Schlitze um 20 % kleiner als den Kantenradius der Ablösekante 20k auszubilden.

Weiter kann das Ablöseelement 20 auch aus einem porösen Sintermaterial ausgebildet sein, bei dem Sinterporen die Ausströmöffnungen 20a bilden. In diesem Fall sind die Sinterporen in den Bereichen außerhalb der Ablösekante 20k mit einem Lacküberzug oder dergleichen zu versiegeln.

Bei den vorgenannten Ausführungen sollte das Flächenverhältnis der Gesamtfläche der Ausströmöffnungen 20a zu der geschlossenen Restfläche der Ablösekante 20k 50 : 50 % sein.

Der Druck der Druckluft 22 kann von 1 bar bis 6 bar einstellbar sein, vorzugsweise regelbar sein. Der Druck liegt bevorzugt im Bereich von 1 bar bis 3 bar. Der Druck ist so einzustellen, dass die Prägefolie auf dem Luftpolster gerade "schwimmt". Das ist bei einem Luftspalt im Bereich von 1 µm bis 100 µm der Fall.

Der einzustellende Druck richtet sich nach der Prägegeschwindigkeit, dem Ablösezug und der Ablösebreite der Heißprägefolie bzw. des Substrats.

Die aus den Ausströmöffnungen 20a der Ablösekante 20k ausströmende Druckluft führt vorteilhafterweise auch Wärme von der Ablösekante 20k ab, die durch das noch warme beprägte Substrat 17 herangeführt wird. Durch diesen Kühleffekt wird vermieden, dass nach längerem Dauerbetrieb die vom Substrat abgelöste Trägerschicht 15t an der Ablösekante anschmilzt, d. h. zu stark erweicht wird und dadurch an der Ablösekante 20k oder an anderen Bereichen des Ablöseelements 20 haften bleibt bzw. zu stark reibt.

Es kann vorgesehen sein, die Temperatur der Druckluft 22 so zu regeln, dass die Temperatur der Ablösekante 20k eine definierten und langzeitstabilen Wert einnimmt, beispielsweise im Bereich von 10 °C bis 40 °C, bevorzugt im Bereich von 15 °C bis 30 °C.

Wie Fig. 2 zeigt, wird die abgelöste Trägerschicht 15t unter einem Ablösewinkel α zur Oberseite des beprägten Substrats 17 abgeführt. Die Trägerschicht 15t läuft parallel zu einer Stirnfläche des Ablöseelements 20, wobei ein durch das Luftpolster definierter Abstandsraum zwischen der Stirnfläche und der Trägerschicht 15t ausgebildet ist. In dem in Fig. 2 dargestellten Ausführungsbeispiel ist der Ablösewinkel α ein spitzer Winkel. Der Ablösewinkel α wird dabei durch die Auflagefläche des Substrats 17 und die stromabwärts an die Ablösekante 20k angrenzenden Stirnfläche 20s des Ablöseelements 20 eingeschlossen.

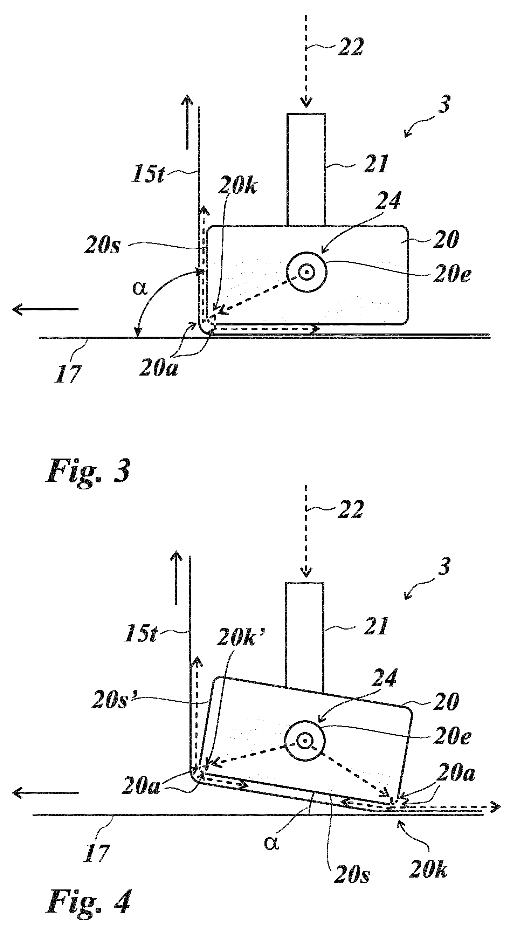

In dem in Fig. 3 dargestellten Ausführungsbeispiel ist der Ablösewinkel α ein Rechter Winkel.

Der Ablösewinkel α ist über ein Drehlager 24 einstellbar, dessen Drehachse parallel zu der Längsachse des Ablöseelements 20 verläuft. In den in den Fig. 2 bis 4 dargestellten Ausführungsbeispielen ist das Drehlager 24 beispielhaft an dem ausgangsseitigen Endabschnitt des Anschlussstutzens 21 vorgesehen. Vorteilhafterweise kann das Ablöseelement 20 um ±15° schwenkbar ausgebildet sein.

Fig. 4 zeigt ein Ausführungsbeispiel, bei dem das Ablöseelement 20 eine erste Ablösekante 20k und eine zweite Ablösekante 20k' aufweist, die in Bewegungsrichtung des Substrats 17 hintereinander angeordnet sind. An der an die erste Ablösekante 20k angrenzenden unteren Stirnfläche 20s ist ein relativ kleiner (spitzer) Ablösewinkel α eingestellt. Die abgelöste Trägerschicht 15t ist parallel zu der unteren Stirnfläche des Ablöseelements 20 über ein erstes Luftpolster geführt und wird an der stromabwärts hinter der ersten Ablösekante 20k angeordneten zweiten Ablösekante 20k' senkrecht zur Oberseite des Substrats 17 abgeführt. Die zweite Ablösekante 20k' wirkt dabei als eine Umlenkkante für die Trägerschicht 15t.

### Bezugszeichenliste

- 1: Heißprägevorrichtung
- 2: Prägevorrichtung
- 3: Ablösevorrichtung
- 3k: Ablösekante
- 11: Prägewalze
- 11b: Beschichtung
- 12: Gegendruckwalze
- 13: Heizeinrichtung
- 14: zu beprägendes Substrat
- 15: Heißprägefolie
- 15t: Trägerschicht
- 15u: Übertragungsschicht
- 16: Prägespalt
- 17: beprägtes Substrat
- 18: nahtloses Band
- 19: Umlenkwalze
- 20: Ablöseelement
- 20a: Ausströmöffnung
- 20e: Einströmöffnung
- 20k: Ablösekante, erste Ablösekante
- 20k': zweite Ablösekante
- 20s: Stirnfläche
- 21: Anschlussstutzen
- 22: Druckluft
- 23: Kompressor
- 24: Drehlager bzw. Drehpunkt
- α: Ablösewinkel

## Patentansprüche

1. Heißprägevorrichtung (1) mit einer Prägevorrichtung (2) zur Übertragung einer auf einer Trägerschicht (15t) einer Heißprägefolie (15) angeordneten Übertragungsschicht (15u) auf ein Substrat (14), umfassend eine beheizbare Prägewalze (11) und eine Gegendruckwalze (12), zwischen denen ein Prägespalt (16) ausgebildet ist, in dem ein beprägtes Substrat (17) ausgebildet wird, sowie eine stromabwärts angeordnete Ablösevorrichtung (3) zur Ablösung der Trägerschicht (15t) von dem beprägten Substrat (17),
**dadurch gekennzeichnet,**
**dass** die Ablösevorrichtung (3) ein Ablöseelement (20) aufweist, das als ein balkenförmiger Hohlkörper ausgebildet ist, an dem eine Zuführung für ein Druckgas (21) angeordnet ist, und
**dass** mindestens eine Längskante des Ablöseelements (20) als eine perforierten Ablösekante (20k) mit Ausströmöffnungen (20a) für das Druckgas (22) zur Ausbildung eines Gaspolsters zwischen der Trägerschicht (15t) und der Ablösekante (20k) ausgebildet ist,
wobei die Trägerschicht (15t) in der Ablösevorrichtung (3) von dem Substrat (17) abgelöst wird.

2. Heißprägevorrichtung nach Anspruch 1,
**dadurch gekennzeichnet,**
**dass** die Ablösekante (20k) quer zur Laufrichtung und parallel zur Oberseite des beschichteten Substrats (17) angeordnet ist.

3. Heißprägevorrichtung nach Anspruch 1 oder 2,
**dadurch gekennzeichnet,**
**dass** das Ablöseelement (20) einen polygonalen Querschnitt, insbesondere einen rechteckförmigen Querschnitt aufweist.

4. Heißprägevorrichtung nach einem der Ansprüche 1 bis 3,
**dadurch gekennzeichnet,**
**dass** die Ablösekante (20k) Durchgangslöcher aufweist, die in die Austrittsöffnungen (20a) münden.

5. Heißprägevorrichtung nach einem der Ansprüche 1 bis 4,
**dadurch gekennzeichnet,**
**dass** die Ablösekante (20k) als eine abgerundete Kante mit einem Kantenradius ausgebildet ist.

6. Heißprägevorrichtung nach Anspruch 4 oder 5,
**dadurch gekennzeichnet,**
**dass** die Durchgangslöcher als Bohrungen mit einem Bohrungsradius ausgebildet sind, der kleiner als der Kantenradius der Ablösekante (20k) ist, insbesondere um 20 % kleiner als der Kantenradius der Ablösekante (20k).

7. Heißprägevorrichtung nach Anspruch 4 oder 5,
**dadurch gekennzeichnet,**
**dass** die Durchgangslöcher als Schlitze mit einer Schlitzbreite ausgebildet sind, der kleiner als der Kantenradius der Ablösekante (20k) ist, insbesondere um 20 % kleiner als der Kantenradius der Ablösekante (20k).

8. Heißprägevorrichtung nach Anspruch 4 oder 5,
**dadurch gekennzeichnet,**
**dass** das Ablöseelement (20) aus einem Sintermaterial mit offenen Poren ausgebildet ist, wobei die offenen Poren die Durchgangslöcher bilden und wobei die offenen Poren in den Bereichen außerhalb der Ablösekante (20k) mit einem Lacküberzug versiegelt sind.

9. Heißprägevorrichtung nach Anspruch 4 oder 5,
**dadurch gekennzeichnet,**
**dass** die Durchgangslöcher gleichmäßig über die Fläche der Ablösekante (20k) verteilt sind.

10. Heißprägevorrichtung nach einem der Ansprüche 1 bis 9,
**dadurch gekennzeichnet,**
**dass** das Flächenverhältnis der Gesamtfläche der Ausströmöffnungen (20a) zu der geschlossenen Restfläche 50 : 50 % ist.

11. Heißprägevorrichtung nach einem der Ansprüche 1 bis 10,
**dadurch gekennzeichnet,**
**dass** der Druck des Druckgases im Bereich von 1 bar bis 6 bar ist, vorzugsweise im Bereich von 1 bar bis 3 bar, wobei der Druck des Druckgases insbesondere so gewählt ist, dass zwischen der Oberfläche der Ablösekante (20k) und der der Ablösekante (20k) zugewandten Oberfläche der Trägerschicht (15t) ein Gaspolster mit einer Dicke im Bereich von 1 µm bis 100 µm ausgebildet ist.

12. Heißprägevorrichtung nach einem der Ansprüche 1 bis 11,
**dadurch gekennzeichnet,**
**dass** das Ablöseelement (20) in einem horizontalen Achsabstand von 200 mm bis 300 mm stromabwärts hinter der Prägewalze (11) angeordnet ist, bevorzugt in einem horizontalen Achsabstand von 280 mm bis 295 mm angeordnet ist.

13. Heißprägevorrichtung nach einem der Ansprüche 1 bis 12,
**dadurch gekennzeichnet,**
**dass** der vertikale Abstand zur Unterseite des beprägten Substrats (17) und/oder der Neigungswinkel des Ablöseelements (20) einstellbar sind.

14. Heißprägevorrichtung nach Anspruch 13,
**dadurch gekennzeichnet,**
**dass** der vertikale Abstand im Bereich von 0,2 mm bis 5 mm ist, bevorzugt im Bereich von 1,5 mm bis 3 mm ist.

15. Heißprägevorrichtung nach Anspruch 13 oder 14,
**dadurch gekennzeichnet,**
**dass** das Ablöseelement (20) um eine Drehachse parallel zur Längsachse des Ablöseelements (20) um ±15° schwenkbar ausgebildet ist.

## Claims

1. Hot stamping device (1) having a stamping device (2) for transferring a transfer layer (15u), which is arranged on a carrier layer (15t) of a hot stamping film (15), to a substrate (14), comprising a heatable stamping roller (11) and a counter-pressure roller (12), between which a stamping gap (16) is formed, in which a stamped substrate (17) is formed, as well as a detachment device (3) arranged downstream for the detachment of the carrier layer (15t) from the stamped substrate (17), **characterised in that**
the detachment device (3) has a detachment element (20) which is formed as a bar-shaped hollow body, on which a feed for a pressurised gas (21) is arranged, and
at least one longitudinal edge of the detachment element (20) is formed as a perforated detachment edge (20k) having outflow openings (20a) for the pressurised gas (22) to form a gas cushion between the carrier layer (15t) and the detachment edge (20k), wherein the carrier layer (15t) is detached from the substrate (17) in the detachment device (3).

2. Hot stamping device according to claim 1,
**characterised in that**
the detachment edge (20k) is arranged transversely to the running direction and in parallel with the upper side of the coated substrate (17).

3. Hot stamping device according to claim 1 or 2,
**characterised in that**
the detachment element (20) has a polygonal cross section, in particular a rectangular cross section.

4. Hot stamping device according to one of claims 1 to 3,
**characterised in that**
the detachment edge (20k) has through holes which lead into the outflow openings (20a).

5. Hot stamping device according to one of claims 1 to 4,
**characterised in that**
the detachment edge (20k) is formed as a rounded edge having an edge radius.

6. Hot stamping device according to claim 4 or 5,
**characterised in that**
the through holes are formed as bores having a bore radius which is smaller than the edge radius of the detachment edge (20k), in particular 20% smaller than the edge radius of the detachment edge (20k).

7. Hot stamping device according to claim 4 or 5,
**characterised in that**
the through holes are formed as slots having a slot width which is smaller than the edge radius of the detachment edge (20k), in particular 20% smaller than the edge radius of the detachment edge (20k).

8. Hot stamping device according to claim 4 or 5,
**characterised in that**
the detachment element (20) is formed of a sintered material having open pores, wherein the open pores form the through holes and wherein the open pores are sealed with a lacquer coating in the regions outside the detachment edge (20k).

9. Hot stamping device according to claim 4 or 5,
**characterised in that**
the through holes are distributed evenly across the surface of the detachment edge (20k).

10. Hot stamping device according to one of claims 1 to 9,
**characterised in that**
the surface ratio of the total surface area of the outflow openings (20a) with respect to the closed remaining surface area is 50:50%.

11. Hot stamping device according to one of claims 1 to 10,
**characterised in that**
the pressure of the pressurised gas is in the range from 1 bar to 6 bars, preferably in the range from 1 bar to 3 bars, wherein the pressure of the pressurised gas is in particular selected in such a way that a gas cushion having a thickness in the range from 1 µm to 100 µm is formed between the surface of the detachment edge (20k) and the surface of the carrier layer (15t) facing the detachment edge (20k).

12. Hot stamping device according to one of claims 1 to 11,
**characterised in that**
the detachment element (20) is arranged downstream behind the stamping roller (11) with horizontal axial spacing of 200mm to 300mm, preferably with horizontal axial spacing of 280mm to 295mm.

13. Hot stamping device according to one of claims 1 to 12,
**characterised in that**
the vertical spacing with respect to the underside of the stamped substrate (17) and/or the angle of inclination of the detachment element (20) are able to be adjusted.

14. Hot stamping device according to claim 13,
**characterised in that** the vertical spacing is in the range from 0.2mm to 5mm, preferably in the range from 1.5mm to 3mm.

15. Hot stamping device according to claim 13 or 14,
**characterised in that**
the detachment element (20) is formed to be able to be pivoted by ±15° around an axis of rotation in parallel with the longitudinal axis of the detachment element (20).

## Revendications

1. Dispositif d'estampage à chaud (1) comprenant un dispositif d'estampage (2) servant à transférer sur un substrat (14) une couche de transfert (15u) disposée sur une couche de support (15t) d'un film d'estampage à chaud (15), comprenant un cylindre d'estampage (11) pouvant être chauffé et un cylindre de contre-pression (12), entre lesquelles une fente d'estampage (16) est réalisée, dans laquelle un substrat (17) estampé est réalisé, ainsi qu'un dispositif de séparation (3) disposé en aval, servant à séparer la couche de support (15t) du substrat (17) estampé,
**caractérisé en ce**
**que** le dispositif de séparation (3) présente un élément de séparation (20), qui est réalisé sous la forme d'un corps creux en forme de poutre, au niveau duquel est disposée une arrivée pour un gaz sous pression (21), et
en ce qu'au moins une arête longitudinale de l'élément de séparation (20) est réalisée sous la forme d'une arête de séparation (20k) perforée pourvue d'ouvertures d'évacuation (20a) pour le gaz sous pression (22) servant à réaliser un coussin de gaz entre la couche de support (15t) et l'arête de séparation (20k), dans lequel la couche de support (15t) est séparée du substrat (17) dans le dispositif de séparation (3).

2. Dispositif d'estampage à chaud selon la revendication 1,
**caractérisé en ce**
**que** l'arête de séparation (20k) est disposée de manière transversale par rapport au sens de déplacement et de manière parallèle par rapport au côté supérieur du substrat (17) enduit.

3. Dispositif d'estampage à chaud selon la revendication 1 ou 2,
**caractérisé en ce**
**que** l'élément de séparation (20) présente une section transversale polygonale, notamment une section transversale de forme rectangulaire.

4. Dispositif d'estampage à chaud selon l'une quelconque des revendications 1 à 3,
**caractérisé en ce**
**que** l'arête de séparation (20k) présente des trous de passage, qui débouchent dans les ouvertures de sortie (20a).

5. Dispositif d'estampage à chaud selon l'une quelconque des revendications 1 à 4,
**caractérisé en ce**
**que** l'arête de séparation (20k) est réalisée sous la forme d'une arête arrondie présentant un rayon d'arête.

6. Dispositif d'estampage à chaud selon la revendication 4 ou 5,
**caractérisé en ce**
**que** les trous de passage sont réalisés sous la forme d'alésages présentant un rayon d'alésage, qui est inférieur au rayon d'arête de l'arête de séparation (20k), notamment inférieur de 20 % au rayon d'arête de l'arête de séparation (20k).

7. Dispositif d'estampage à chaud selon la revendication 4 ou 5,
**caractérisé en ce**
**que** les trous de passage sont réalisés sous la forme d'entailles présentant une largeur d'entaille, qui est inférieure au rayon d'arête de l'arête de séparation (20k), notamment inférieure de 20 % au rayon d'arête de l'arête de séparation (20k).

8. Dispositif d'estampage à chaud selon la revendication 4 ou 5,
**caractérisé en ce**
**que** l'élément de séparation (20) est réalisé à partir d'un matériau de frittage présentant des pores ouverts, sachant que les pores ouverts forment les trous de passage et sachant que les pores ouverts sont scellés dans les zones à l'extérieur de l'arête de séparation (20k) pourvue d'un revêtement de vernis.

9. Dispositif d'estampage à chaud selon la revendication 4 ou 5,
**caractérisé en ce**
**que** les trous de passage sont répartis de manière homogène sur la surface de l'arête de séparation (20k).

10. Dispositif d'estampage à chaud selon l'une quelconque des revendications 1 à 9,
**caractérisé en ce**
**que** le rapport de surface de la surface totale des ouvertures d'évacuation (20a) par rapport à la surface restante fermée est de 50:50 %.

11. Dispositif d'estampage à chaud selon l'une quelconque des revendications 1 à 10,
**caractérisé en ce**
**que** la pression du gaz sous pression se situe dans la plage allant de 1 bar à 6 bar, de préférence dans la plage allant de 1 bar à 3 bar, dans lequel la pression du gaz sous pression est choisie notamment de telle sorte qu'un coussin de gaz présentant une épaisseur comprise dans la plage allant de 1 µm à 100 µm est réalisé entre la surface de l'arête de séparation (20k) et la surface, tournée vers l'arête de séparation (20k), de la couche de support (15t).

12. Dispositif d'estampage à chaud selon l'une quelconque des revendications 1 à 11,
**caractérisé en ce**
**que** l'élément de séparation (20) est disposé à une distance axiale horizontale allant de 200 mm à 300 mm en amont derrière le cylindre d'estampage (11), de préférence est disposé à une distance axiale horizontale allant de 280 mm à 295 mm.

13. Dispositif d'estampage à chaud selon l'une quelconque des revendications 1 à 12,
**caractérisé en ce**
**que** la distance verticale par rapport au côté inférieur du substrat (17) estampé et/ou l'angle d'inclinaison de l'élément de séparation (20) peuvent être réglés.

14. Dispositif d'estampage à chaud selon la revendication 13,
**caractérisé en ce**
**que** la distance verticale est comprise dans la plage allant de 0,2 mm à 5 mm, de préférence dans la plage allant de 1,5 mm à 3 mm.

15. Dispositif d'estampage à chaud selon la revendication 13 ou 14,
**caractérisé en ce**
**que** l'élément de séparation (20) est réalisé de manière à pouvoir pivoter autour d'un axe de rotation de manière parallèle par rapport à l'axe longitudinal de l'élément de séparation (20) de +- 15°.
